# FASCICULE DE BREVET EUROPEEN

(11) **EP 1 039 094 B1**
(45) Date de publication et mention de la délivrance du brevet: **29.12.2004**
(21) Numéro de dépôt: 00400583.1
(22) Date de dépôt: 03.03.2000
(51) Int. Cl.: E21B 10/22, F16J 15/32

(54) **Trépan à cones avec dispositif d'étanchéité**
Rollenbohrmeissel mit Dichtungsvorrichtung
Roller drill bit with sealing device

(30) Priorité: 26.03.1999 FR 9903813
(43) Date de publication de la demande: 27.09.2000
(73) Titulaire: HUTCHINSON, 75008 Paris (FR); TOTAL, 92069 Paris La Défense Cédex (FR)
(72) Inventeur: Besson, Alain, 78470 Saint Remy les Chevreuse (FR); Fayaud, Patrick, 49000 Angers (FR); Tissier, Bernard, 49500 Nyoiseau (FR); Lecour, Pierre, 94270 Le Kremlin Bicetre (FR)
(74) Mandataire: Jacquard, Philippe Jean-Luc

(56) Documents cités:
- DE-A- 4 107 678
- DE-A- 19 614 946
- GB-A- 2 101 238
- US-A- 3 682 488
- US-A- 3 944 306
- US-A- 4 262 759
- US-A- 4 289 321
- US-A- 4 298 079
- US-A- 4 344 629
- US-A- 4 981 303
- US-A- 5 015 001
- US-A- 5 027 911
- US-A- 5 513 715
- HOOPER: "The Design of a Mechanical Face Seal for a Roller Cone Dill bit" THE AMERICAN SOCIETY OF MECHANICAL ENGINEERS WINTER ANNUAL MEETING, 1 - 6 décembre 1991, pages 1-11, XP002123777 ATLANTA (GORGIA-USA)

## Description

La présente invention concerne une tête de forage présentant un trépan à cône.

Un tel trépan est généralement équipé de trois cônes, et de ce fait il est connu sous la dénomination de tricône, et il est destiné à être utilisé notamment pour des forages de grande profondeur, par exemple 3000 à 4000 mètres, voire plus.

La tête de forage est amenée à fonctionner dans des conditions sévères, c'est-à-dire en présence d'une boue de forage abrasive et de fortes vibrations, à une pression souvent supérieure à 400 bars (pour les valeurs de profondeurs précitées), et à des températures pouvant dépasser 150°C.

Un des points cruciaux des cônes rotatifs est leur joint dynamique qui doit conserver son efficacité dans les conditions précitées.

Il existe actuellement deux types de joint qui sont utilisés dans l'application envisagée, à savoir les joints toriques et les joints métal-métal.

Des têtes de forage mettant en oeuvre un ou plusieurs joints toriques sont décrits notamment dans les Brevets américains US 4 623 028 (REED TOOL COMPANY), US 5 456 327 (SMITH INTERNATIONAL) US 4 298 079 (AKTIE BOLAGET SKF) et US 5 129 471 (HUGHES TOOL COMPANY).

Les joints de type métal-métal présentent en général de meilleures durées de vie que les joints toriques. Des joints de ce type sont décrits par exemple dans la Demande de Brevet Européen EP 138 737 (HUGHES TOOL), dans les Brevets Américains US 4 344 629, US 4 824 123 et US 4 822 057, tous les trois au nom de SMITH INTERNATIONAL INC., US 4 838 365 (REED TOOL COMPANY) et US 4 306 727 (REED ROCK BIT COMPANY).

Les problèmes posés par la conception de ce type de joint ont été exposés dans l'article MIKE HOOPER et MARK HOMMEL paru dans le Compte Rendu de l' «ASME Winter Annual Meeting, Dec. 1-6, 1991, ATLANTA - GA », paru sous la référence 91-WA-DE-11 (p. 1-11) de The American Society of Mechanical Engineers (345 E. 47 St. New-York NY 10017).

La présente invention a pour objet une tête de forage présentant un trépan à cônes, pour lequel l'étanchéité d'un cône est assurée par un dispositif qui peut être en élastomère, et qui apporte des performances améliorées par rapport aux joints toriques.

Une tête de forage de ce type est décrite dans le Brevet des Etats-Unis US 4 298 079.

Un objet de la présente invention est que l'étanchéité soit assurée par un dispositif présentant une durée de vie élevée.

Un autre objet de l'invention est d'autoriser une amplitude de déformation ou bien de déboîtement angulaire de la pièce mobile sans que l'étanchéité soit affectée.

Un autre objet de la présente invention est que l'étanchéité s'accompagne d'une prise en compte efficace de la contre- pression générée par un système de compensation de pression.

Un autre objet de la présente invention est que l'étanchéité soit obtenue par un dispositif dont le montage est facilité.
Au moins un des objets précités est atteint, selon la présente invention, par une tête de forage présentant un trépan à cônes, chaque cône telle que définie dans la revendication 1.

La première et/ou la deuxième lèvre d'étanchéité sont avantageusement en élastomère. La deuxième lèvre peut présenter un bourrelet annulaire comportant un double biseau formant une arête assurant l'étanchéité.

Au moins une lèvre présente avantageusement un ressort d'appui, par exemple un ressort à spires précontraintes constituant un anneau torique.

Selon un mode de réalisation préféré, la tête de forage est caractérisée en ce que la première et la deuxième lèvres sont portées par une première armature de révolution autour dudit axe de rotation et solidaire de la partie rotative et en ce qu'au moins une desdites lèvres présente un prolongement qui forme un joint d'étanchéité statique entre la première armature et une paroi de la partie rotative. La première armature peut être constituée d'une seule pièce ou bien d'au moins deux pièces assemblées.

Selon un mode de réalisation particulièrement avantageux, la tête de forage est caractérisée en ce que la première et la deuxième face d'appui font partie d'une deuxième armature constituée par une pièce de révolution autour dudit axe de rotation et qui est solidaire de la partie rotative et en ce que cette deuxième armature présente un joint assurant une étanchéité statique entre elle et la partie rotative.

La tête de forage peut également présenter une troisième lèvre d'étanchéité présentant une face externe dirigée vers lesdites matières issues de forage et une face interne dirigée vers la face externe de la première lèvre d'étanchéité.

D'autres caractéristiques et avantages de l'invention apparaîtront mieux à la lecture de la description qui va suivre, donnée à titre d'exemple non limitatif, en liaison avec les dessins dans lesquels :
- la figure 1a représente en coupe partielle un cône rotatif équipé d'un joint selon l'invention ;
- la figure 1b représente un détail agrandi du joint selon la figure 1a ;
- la figure 2 représente une variante du joint selon l'invention ;
- la figure 3 représente un mode de réalisation préféré de l'invention permettant de décoder le déplacement angulaire de l'outil.

La figure 1a représente un cône rotatif d'un trépan à cônes de type tricône, qui comporte une partie fixe 1 présentant un axe XX et une partie mobile 2 entraînée en rotation autour de cet axe XX, et qui porte des dents d'abrasion 3. Du côté amont, la partie mobile 2 est séparée de la partie fixe 1 par une rainure périphérique 4 ménagée entre la face amont 59 de la partie mobile 2 et un épaulement 58 de la partie fixe 1. Cette rainure qui est en contact avec les matières issues du forage, en général une boue de forage, débouche dans une cavité qui reçoit un joint 10 destiné à protéger la partie mobile 2 de la pénétration de la boue de forage. A l'opposé de la rainure 4, le logement est en communication avec un canal 5 qui communique avec la sortie 6 d'un système de compensation de pression qui délivre sous pression un fluide de graissage qui sert d'une part à protéger le ou les roulements du cône rotatif et d'autre part, à assurer le graissage du joint 10.

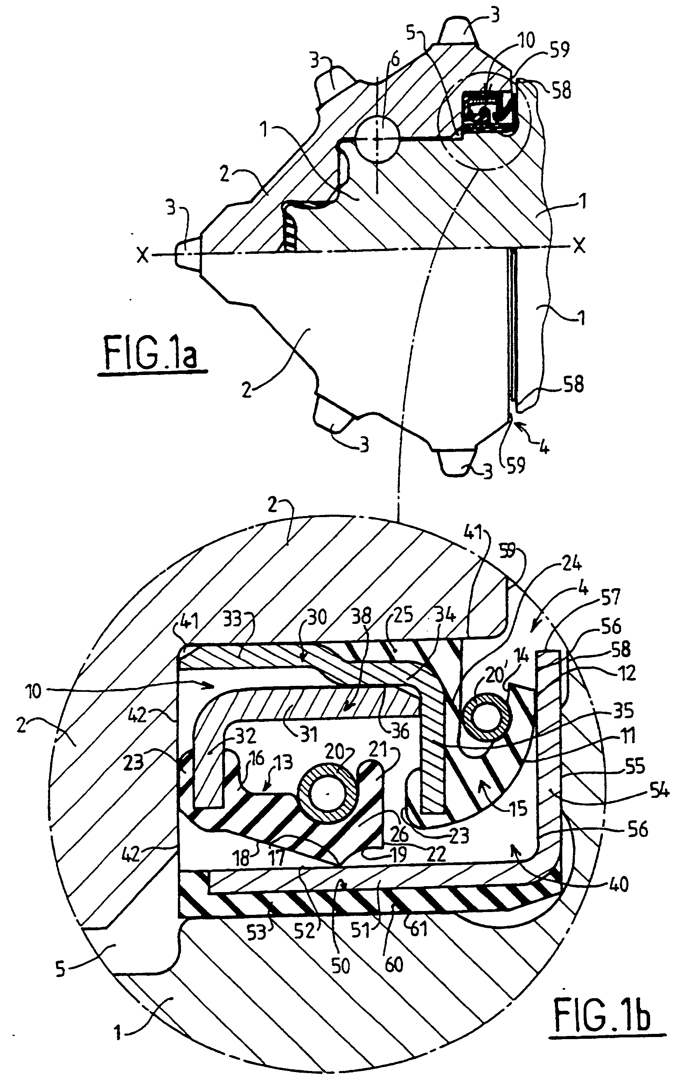

Comme le montre la figure 1b, le joint 10 présente une première lèvre 11, qui présente une face 14 concave qui est dirigée vers la rainure 4 et une face convexe 15 qui est dirigée vers une cavité 40 formant un réservoir de produit de graissage. La lèvre 11 est portée par une pièce d'armature métallique 30 qui est de révolution autour de l'axe XX et qui présente en coupe une forme de L. Deux régions annulaires 23 et 24 enserrent la petite branche 35 du L pour permettre la fixation de la lèvre 11 à la pièce d'armature 30. La grande branche du L présente une région d'extrémité 33 emmanchée sur une face 41 de la pièce mobile 2, et une région 34 qui est espacée de la face 41 de manière à loger un prolongement cylindrique 25 de la région annulaire24, ce prolongement 25 formant un joint statique. La lèvre d'étanchéité 11 étant dirigée vers la rainure 4, toute augmentation de pression de la boue de forage tend à plaquer sa région de contact 12 contre la face 56 de la branche 54 d'une pièce d'armature 50, d'où un verrouillage positif assurant une étanchéité positive vis-à-vis des boues de forage.

Cette pièce d'armature 50 présente une branche 51, à angle droit avec la branche 54 et qui est emmanchée (par exemple à l'aide d'un vérin) sur une région cylindrique 61 de la pièce fixe 1 avec interposition d'un joint 60 en élastomère, qui forme un joint statique au niveau de la paroi 60.

Le joint 10 présente une deuxième lèvre d'étanchéité 13 qui présente une manchette 16 et un talon 26 ayant une face 19 dirigée vers la cavité 40, et une face 18 dirigée vers le canal 5, les faces 18 et 19 délimitant entre elles une arête d'étanchéité circulaire 17. En outre, un ressort 20, par exemple un ressort à spires précontraintes refermé sur lui-même de manière à former un anneau torique, est monté dans une rainure de la lèvre 13 et est maintenu par une bavette de retenue 21. Ce ressort permet d'appliquer la lèvre 13 sur la face d'appui 52 de l'armature métallique 50. La lèvre 11 peut également comporter un ressort 20', qui peut être du même type que le précédent et qui appuie sur la face 14 pour appliquer la région de contact 12 contre la face 56.

Le talon 26 de la lèvre 13 présente une bavette d'accrochage 23 sur la petite branche 32 d'une pièce d'armature 38 qui présente en coupe la forme d'un L et dont la branche principale 31 est emmanchée par sa face externe cylindrique 36 sur la face interne de la région 34 de l'armature métallique 30.

La lèvre d'étanchéité 13 étant dirigée vers la cavité 40, une augmentation de pression dans le canal 5 tend à exercer une force sur la face 18 pour dégager l'arête 17 de la face d'appui 52 et laisser libre passage à la graisse pour lui permettre de remplir la cavité 40 et de lubrifier ainsi la lèvre d'étanchéité 11. Au cas où la pression dans le canal 5 dépasse la pression des boues de forage, la graisse tend à soulever la lèvre 11 de sa face d'appui 56 et à sortir vers la rainure 4.

Par contre, si la pression de la graisse devient inférieure à celle des boues de forage, la lèvre 11 exerce sa fonction de verrouillage positif, alors que la cavité 40 reste remplie de graisse et constitue un réservoir apte à assurer la continuité du graissage des parties actives 12 et 17 des lèvres 11 et 13.

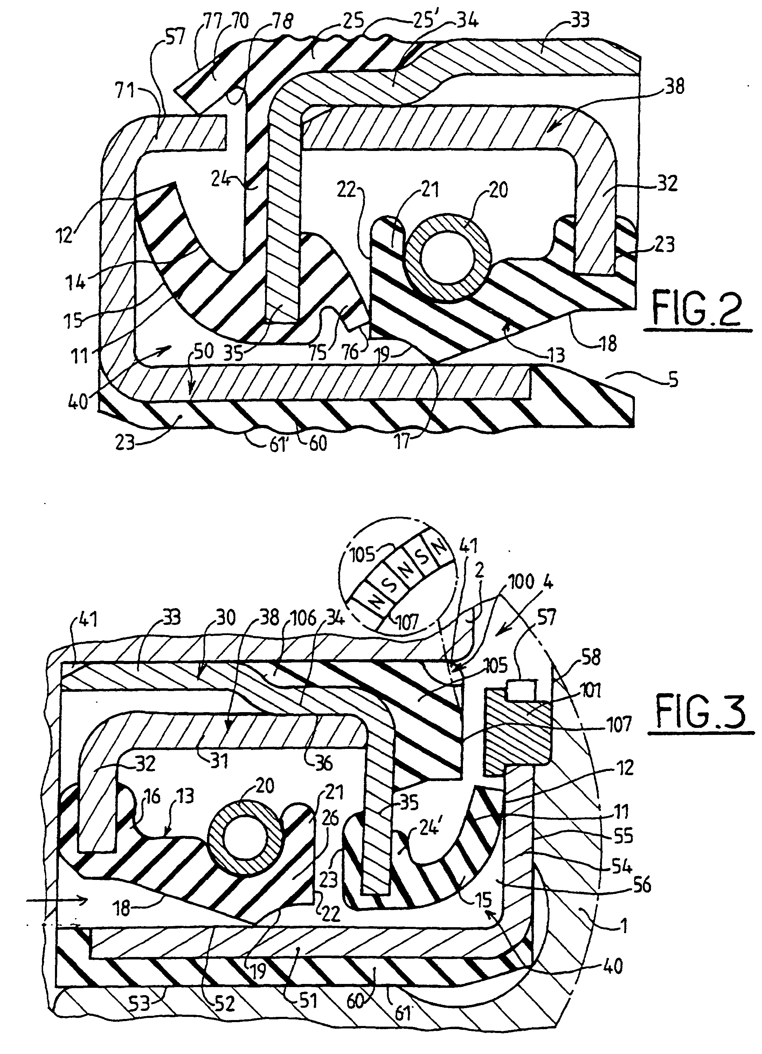

Le mode de réalisation de la figure 2 se distingue de celui précédemment décrit en relation avec la figure 1b par une troisième lèvre d'étanchéité 70 qui prolonge la région 25 et qui vient en appui sur la face annulaire 57 de la branche 54 de l'armature métallique 50.

La branche 54 présente à cet effet un prolongement 71 qui permet d'augmenter la surface de la face 57 et donc l'appui de la lèvre 70.

Le joint de la figure 2 présente également une lèvre d'étanchéité 75 qui prolonge la région 23 de la lèvre 11 et qui vient en appui en 76 sur la face 22 de la bavette 21, ce qui permet de limiter le volume du réservoir de graisse 40. La lèvre 75 présente une face externe 77 dirigée vers les matières issues du forage et une face interne 78 dirigée vers la face externe 14 de la lèvre 11. On remarquera également que les régions externes 61' et 25' des régions 23 et 25 présentent un ou plusieurs bourrelets ou ondulations pour améliorer l'étanchéité statique.

Le joint de la figure 3 est sensiblement identique au joint des figures 1a et 1b, à ceci près que la lèvre 15 est fixée à la branche 35 par deux régions annulaires 23 et 24', et qu'il présente un codeur magnétique multipolaire 100 et un capteur 101 qui se font face, et dont l'un est porté par la partie fixe 1 et l'autre par la partie mobile 2. Un capteur 101, par exemple un capteur à effet Hall est logé dans la branche 54, au voisinage de son extrémité 57 et fait face à une région annulaire 105d', un codeur multipolaire 100 qui présente une région cylindrique 106 logée, comme précédemment le prolongement 25, dans l'espace disponible entre la région 34 et la face 41. La région 105 du codeur multipolaire présente au moins deux régions magnétiques de polarité alternée nord et sud (voir encadré). Le codeur 100 est réalisé sous la forme d'une pièce en élastomère qui, dans ces régions magnétiques, est chargé de ferrite qui est ensuite magnétisée de manière connue en soi. Une face annulaire plane 107 de la région 105 fait face au capteur 101 en vue du décodage. Le codeur 100 est solidaire à la partie mobile 2 et le capteur 101 est solidaire de la partie fixe 1. On obtient ainsi une détection qui permet de vérifier que la partie mobile 2 de l'outil tourne, et éventuellement de mesurer et/ou de commander sa vitesse de rotation.

## Revendications

1. Tête de forage présentant un trépan à cônes, chaque cône présentant une partie fixe et une partie rotative autour d'un axe de rotation et un dispositif d'étanchéité dynamique entre la partie fixe et la partie rotative, destiné à éviter la pénétration de matières issues du forage, la partie fixe étant pourvue d'un système de compensation de pression apte à délivrer à sa sortie un produit de graissage à une contre-pression désirée, le dispositif d'étanchéité (10) étant porté par la partie rotative (2) et présentant une première (11) et une deuxième (13) lèvres d'étanchéité qui forment chacune une surface de révolution autour dudit axe de rotation et qui viennent s'appuyer respectivement contre une première (56) et une deuxième (52) face d'appui solidaires de la partie fixe, la première lèvre d'étanchéité (11) présente une face externe (14) dirigée vers lesdites matières issues du forage et une face interne (5) dirigée vers une cavité (40) formant un réservoir de produit de graissage et étant orientée de manière à se plaquer contre la première face d'appui (56) sous l'action de la pression, **caractérisée en ce que** la deuxième lèvre d'étanchéité (13) présentant une face externe (18) dirigée vers la sortie du système de compensation de pression et une face interne (19) dirigée vers ladite cavité (40), et est orientée de manière à s'écarter de la deuxième face d'appui (52) sous l'action de ladite contre-pression du produit de graissage, de manière à permettre à celui-ci de remplir la cavité et d'exercer une compensation de la pression dans la cavité (40).

2. Tête de forage selon la revendication 1, **caractérisée en ce que** la première face d'appui (56) est constituée par une piste définie par un anneau dont l'axe est l'axe de rotation du cône, et **en ce que** la deuxième face d'appui (52) est constituée par une piste définie par un cylindre dont l'axe est l'axe de rotation du cône,

3. Tête de forage selon une des revendications 1 ou 2, **caractérisée en ce que** la première (11) et la deuxième (13) lèvres sont en élastomère.

4. Tête de forage selon la revendication 3, **caractérisée en ce que** la deuxième lèvre (13) présente un bourrelet annulaire (26) comportant un double biseau (18, 19) formant une arête (17) assurant l'étanchéité.

5. Tête de forage selon une des revendications 3 ou 4, **caractérisée en ce qu'**au moins une lèvre (11, 13) présente un ressort d'appui (20).

6. Tête de forage selon la revendication 5, **caractérisée en ce que** le ressort (20) est un ressort à spires précontraintes constituant un anneau torique.

7. Tête de forage selon une des revendications précédentes, **caractérisée en ce que** la première (11) et la deuxième lèvre (13) sont portées par une première armature (30, 38) de révolution autour dudit axe de rotation et solidaire de la partie rotative (2) et **en ce qu'**au moins une desdites lèvres (11, 13) présente un prolongement qui forme un joint d'étanchéité statique entre la première armature (30, 38) et une paroi (41, 42) de la partie fixe/rotative (2).

8. Tête de forage selon la revendication 7, **caractérisée en ce que** la première armature est constituée d'au moins deux pièces assemblées(30, 38).

9. Tête de forage selon une des revendications précédentes, **caractérisée en ce que** la première (56) et la deuxième (52) face d'appui font partie d'une deuxième armature (50) constituée par une pièce de révolution autour dudit axe de rotation et qui est solidaire de la partie fixe (1) et **en ce que** cette deuxième armature (50) présente un joint statique (60) assurant une étanchéité statique entre elle (50) et la partie fixe (1).

10. Tête de forage selon une des revendications précédentes, **caractérisée en ce qu'**elle présente une troisième lèvre d'étanchéité (70) présentant une face externe (77) dirigée vers lesdites matières issues du forage et une face interne (78)dirigée vers la face externe (14) de la première lèvre d'étanchéité (11).

11. Tête de forage selon une des revendications précédentes, **caractérisée en ce qu'**elle présente un codeur magnétique multipolaire (100) et un capteur (101) qui se font face, et dont l'un est porté par la partie fixe (1) et l'autre par la partie mobile (2).

## Claims

1. Drilling head with a cone rock bit, each cone having a stationary part and a part which rotates about an axis of rotation and a dynamic sealing device between the stationary part and the rotary part, this device being intended to avoid the ingress of drilling matter, the stationary part being provided with a pressure-compensating system capable at its output of delivering a lubricating product at a desired back pressure, the sealing device (10) being borne by the rotary part (2) and having a first sealing lip (11) and a second sealing lip (13) each of which forms a surface of revolution about said axis of rotation and which lips bear respectively against a first bearing face (56) and a second bearing face (52) secured to the stationary part, the first sealing lip (11) has an outer face (14) facing toward said drilling matter and an inner face (5) facing toward a cavity (40) which forms a reservoir of lubricating product, (11) and being oriented in such a way that it presses against the first bearing face (56) under the action of the pressure **characterized in that**, the second sealing lip (13) having an outer face (18) facing toward the outlet of the pressure-compensating system and an inner face (19) facing toward said cavity (40), and is oriented in such a way that it moves away from the second bearing face (52) under the action of said back pressure of the lubricating product, so as to allow this product to fill the cavity and compensate for the pressure in the cavity (40).

2. Drilling head according to Claim 1, **characterized in that** the first bearing face (56) consists of a track defined by an annulus, the axis of which is the axis of rotation of the cone, and **in that** the second bearing face (52) consists of a track defined by a cylinder, the axis of which is the axis of rotation of the cone.

3. Drilling head according to either of Claims 1 and 2, **characterized in that** the first lip (11) and the second lip (13) are made of elastomer.

4. Drilling head according to Claim 3, **characterized in that** the second lip (13) has an annular bulge (26) with a double chamfer (18, 19) forming a sharp edge (17) which makes the seal.

5. Drilling head according to either of Claims 3 and 4, **characterized in that** at least one lip (11, 13) has a backing spring (20).

6. Drilling head according to Claim 5, **characterized in that** the spring (20) is a spring with prestressed turns constituting a toric annulus.

7. Drilling head according to one of the preceding claims, **characterized in that** the first lip (11) and the second lip (13) are borne by a first armature (30, 38) that is of revolution about said axis of rotation and secured to the rotary part (2) and **in that** at least one of said lips (11, 13) has an extension which forms a static seal between the first armature (30, 38) and a wall (41, 42) of the stationary/rotary part (2).

8. Drilling head according to Claim 7,
**characterized in that** the first armature consists of at least two parts (30, 38) joined together.

9. Drilling head according to one of the preceding claims, **characterized in that** the first bearing face (56) and the second bearing face (52) form part of a second armature (50) consisting of a part that is of revolution about said axis of rotation and which is secured to the stationary part (1), and **in that** this second armature (50) has a static seal (60) which makes a static seal between it (50) and the stationary part (1).

10. Drilling head according to one of the preceding claims, **characterized in that** it has a third sealing lip (70) with an outer face (77) facing toward said drilling matter and an inner face (78) facing toward the outer face (14) of the first sealing lip (11).

11. Drilling head according to one of the preceding claims, **characterized in that** it has a multiple-pole magnetic encoder (100) and a sensor (101) facing one another, one of which is borne by the stationary part (1) and the other of which is borne by the moving part (2).

## Patentansprüche

1. Bohrkopf mit einem Rollenbohrmeißel, wobei jeder Kegel einen feststehenden Teil und einen um eine Drehachse drehbaren Teil und eine dynamische Dichtungsvorrichtung zwischen dem feststehenden Teil und dem drehbaren Teil aufweist, die bestimmt ist, das Eindringen von vom Bohren herrührenden Materialien zu verhindern, wobei der feststehende Teil mit einem Druckausgleichssystem versehen ist, das am Ausgang ein Schmierprodukt mit einem gewünschten Gegendruck liefern kann, wobei die Dichtungsvorrichtung (10) von dem drehbaren Teil (2) getragen wird und eine erste (11) und eine zweite (13) Dichtlippe aufweist, die jeweils eine um die Drehachse rotationssymmetrische Fläche bilden und die an einer ersten (56) bzw. zweiten (52) Stützfläche, die fest mit dem feststehenden Teil verbunden ist, anliegen, wobei die erste Dichtlippe (11) eine zu den vom Bohren herrührenden Materialien weisende Außenfläche (14) und eine zu einem ein Reservoir für ein Schmierprodukt bildenden Hohlraum (40) weisende Innenfläche (5) aufweist, und die so ausgerichtet ist, dass sie unter der Wirkung des Drucks gegen die erste Stützfläche (56) drückt, **dadurch gekennzeichnet, dass** die zweite Dichtlippe (13) , die eine zum Ausgang des Druckausgleichsystems weisende Außenfläche (18) und eine zum Hohlraum (40) weisende Innenfläche (19) aufweist, so ausgerichtet ist, dass sie sich unter der Wirkung des Gegendrucks des Schmierprodukts von der zweiten Stützfläche (52) entfernt, um ihm zu gestatten, den Hohlraum zu füllen und einen Druckausgleich im Hohlraum (40) auszuüben.

2. Bohrkopf nach Anspruch 1, **dadurch gekennzeichnet, dass** die erste Stützfläche (56) aus einer Bahn besteht, die durch einen Ring definiert wird, dessen Achse die Drehachse des Kegels ist, und dass die zweite Stützfläche (52) aus einer Bahn besteht, die durch einen Zylinder definiert wird, dessen Achse die Drehachse des Kegels ist.

3. Bohrkopf nach Anspruch 1 oder 2, **dadurch gekennzeichnet, dass** die erste (11) und die zweite (13) Lippe aus Elastomer bestehen.

4. Bohrkopf nach Anspruch 3, **dadurch gekennzeichnet, dass** die zweite Lippe (13) einen ringförmigen Wulst (26) mit einer doppelten Abschrägung (18, 19) aufweist, die eine die Dichtigkeit gewährleistende Kante (17) bildet.

5. Bohrkopf nach Anspruch 3 oder 4, **dadurch gekennzeichnet, dass** mindestens eine Lippe (11, 13) eine Stützfeder (20) aufweist.

6. Bohrkopf nach Anspruch 5, **dadurch gekennzeichnet, dass** die Feder (20) eine Feder mit vorgespannten Windungen ist, die einen torischen Ring bilden.

7. Bohrkopf nach einem der vorhergehenden Ansprüche, **dadurch gekennzeichnet, dass** die erste (11) und die zweite (13) Lippe von einer um die Drehachse rotationssymmetrischen ersten Stütze (30, 38), die fest mit dem drehbaren Teil (2) verbunden ist, getragen werden und dass mindestens eine der Lippen (11, 13) eine Verlängerung aufweist, die eine statische Dichtung zwischen der ersten Stütze(30, 38) und einer Wand (41, 42) des feststehenden/drehbaren Teils (2) bildet.

8. Bohrkopf nach Anspruch 7, **dadurch gekennzeichnet, dass** die erste Stütze aus mindestens zwei zusammengefügten Teilen (30, 38) besteht.

9. Bohrkopf nach einem der vorhergehenden Ansprüche, **dadurch gekennzeichnet, dass** die erste (56) und die zweite (52) Stützfläche Teil einer zweiten Stütze (50) bilden, die aus einem um die Drehachse rotationssymmetrischen Teil besteht und fest mit dem feststehenden Teil (1) verbunden ist, und dass diese zweite Stütze (50) eine statische Dichtung (60) aufweist, die eine statische Dichtigkeit zwischen sich (50) und dem feststehenden Teil (1) gewährleistet.

10. Bohrkopf nach einem der vorhergehenden Ansprüche, **dadurch gekennzeichnet, dass** er eine dritte Dichtlippe (70) aufweist, die eine zum Bohrmaterial weisende Außenfläche (77) und eine zur Außenfläche (14) der ersten Dichtlippe (11) weisende Innenfläche (78) aufweist.

11. Bohrkopf nach einem der vorhergehenden Ansprüche, **dadurch gekennzeichnet, dass** er einen mehrpoligen magnetischen Codierer (100) und einen Sensor (101) aufweist, die sich gegenüberliegen, und von denen einer von dem feststehenden Teil (1) und der andere von dem beweglichen Teil (2) getragen wird.
